## Europäisches Patentamt

## European Patent Office

## Office européen des brevets

(11) Veröffentlichungsnummer: **0 047 426**
A1

(12)

# EUROPÄISCHE PATENTANMELDUNG

(21) Anmeldenummer: 81106587.9

(22) Anmeldetag: 25.08.81

(51) Int. Cl.³: **A 01 G 9/26, A 01 G 9/20**

(30) Priorität: 04.09.80 DE 8023616 U

(43) Veröffentlichungstag der Anmeldung: 17.03.82
Patentblatt 82/11

(84) Benannte Vertragsstaaten: **AT BE CH IT LI NL SE**

(71) Anmelder: **Wolf-Geräte GmbH, Gregor-Wolf-Strasse Postfach 860 und 880, D-5240 Betzdorf/Sieg (DE)**

(72) Erfinder: **Kolb, Walter, Martin-Luther-Strasse 51, D-5240 Betzdorf/Sieg (DE)**
Erfinder: **Weid, Helmut, Am Kappelberg 2, D-5241 Niederdreisbach (DE)**

(74) Vertreter: **Wallach, Curt, Dipl.-Ing. Patentanwälte Dipl.-Ing. C.Wallach et al, Dipl.-Ing. G. Koch Dr.T.Haibach Dipl.-Ing. R. Feldkamp Kaufingerstrasse 8, D-8000 München 2 (DE)**

(54) **Anzuchtkasten.**

(57) Bei einem Anzuchtkasten zum Aufziehen von Saatgut ist eine an eine Niederspannungsquelle anschaltbare Heizplatte (10) mit einem elektrischen Heizwiderstand (12) vorgesehen, die Durchtrittsöffnungen aufweist.

- 1 -

Anzuchtkasten

Die Erfindung bezieht sich auf einen Anzuchtkasten zum
Aufziehen von Saatgut. Derartige Anzuchtkästen werden in
unterschiedlichen Größen für Hobby-Gärtner angeboten,
um Pflanzen heranzuziehen, die später im Garten oder
auf dem Balkon eingepflanzt werden. Die üblichen Anzuchtkästen werden mit einem transparenten Deckel geliefert, der eine Sonneneinstrahlung ermöglicht und
gegen Temperaturverlust schützt. Diese bekannten Anzuchtkästen sind auf die Wärme der Sonneneinstrahlung
oder auf eine Umgebungswärme angewiesen, die in vielen
Fällen und/oder verschiedenen Jahreszeiten nicht zur
Verfügung stehen.

Der Erfindung liegt die Aufgabe zugrunde, einen Anzuchtkasten zu schaffen, der unabhängig von Sonneneinstrahlung und Umgebungswärme den Keimlingen die für ihr
Wachstum erforderliche Wärme und Feuchtigkeit zur Verfügung stellt, wobei jedes gewünschte Treibhausklima
erzeugt werden kann.

Gelöst wird die gestellte Aufgabe durch die im Kennzeichnungsteil des Anspruchs 1 angegebenen Merkmale.

Durch die Heizplatte wird erreicht, daß unabhängig von
Sonneneinstrahlung und Umgebungstemperatur eine feste
Temperatur im Anzuchtkasten aufrecht erhalten werden kann,
wobei zur Temperatursteuerung erforderlichenfalls ein Thermostat herangezogen werden kann.

Die Heizplatte ist vorzugsweise in gedruckter Schaltung ausgeführt, wobei die auf einer Epoxydharzplatte vorzugsweise in Meanderform aufgebrachte gedruckte Schaltung durch einen Isolierlack bedeckt ist, um Kurzschlußbrücken durch Feuchtigkeit innerhalb des Anzuchtkastens zu vermeiden. Die Platte wird mit der bedruckten Seite nach unten in den Kasten unter das Erdreich eingelegt, damit beim Bearbeiten des Erdreiches mit Werkzeugen, beispielsweise Schaufeln, eine Beschädigung der Leiterbahnen verhindert ist.

Gemäß einer weiteren Ausgestaltung der Erfindung besteht die Heizplatte aus zwei gleichartigen verklebten Kunststoffschichten, zwischen denen in Rillen der Heizdraht eingelegt ist.

Die Heizplatte wird aus Sicherheitsgründen mit Niederspannung betrieben und aus einer Batterie oder über einen Transformator vom Netz gespeist. Es hat sich gezeigt, daß für Anzuchtkästen mittlerer Größe von beispielsweise 32 x 41 cm mit einer Heizleistung von 11 Watt ausgekommen werden kann.

Der Anzuchtkasten besteht aus drei Teilen, nämlich einem Deckel, einer Wanne und einer Schale. Der Deckel dient zum Schutz des Saatgutes gegen Austrocknen und Kälte (Erzeugung eines Treibhausklimas), er ist leicht abnehmbar und läßt sich bei zu hoher Feuchte öffnen. Durch den glasklaren Werkstoff können die für das Pflanzenwachstum unbedingt notwendigen UV-Strahlen ungehindert an das Saatgut vordringen.

In der Wanne wird das überschüssige Wasser mit den abgeführten Giftstoffen aufgefangen, welches durch die in den Drainage-Kanälen vorgesehenen Löcher aus der Schale abfließen kann.

Die Schale besteht aus einem sehr formstabilen Kunststoff mit Drainage-Kanälen, wobei eine unverlierbar eingebaute Stütze die Möglichkeit schafft, daß der Deckel bis zur gewünschten Höhe geöffnet werden kann, damit die für das Pflanzenwachstum optimale Belüftung eingestellt werden kann.

Die Heizplatte kann in die Wanne bzw. Schale eingelegt werden, um die erforderliche Wärme zu erzeugen. Die Heizplatte ist mit über die Fläche verteilten Öffnungen versehen, durch die einerseits die von dem Heizleiter erzielte Wärme nach oben in das Erdreich gelangen kann, während andererseits überschüssige Feuchtigkeit aus dem Erdreich nach unten in die Schale bzw. die Wanne gelangt.

Weitere zweckmäßige Ausgestaltungen der Erfindung ergeben sich aus den Unteransprüchen.

Nachstehend wird ein Ausführungsbeispiel der Erfindung anhand der Zeichnung beschrieben. In der Zeichnung zeigen

Figur 1 eine perspektivische Ansicht des erfindungsgemäßen Anzuchtkastens mit teilweise geöffnetem Deckel

Figur 2 eine Seitenansicht des Anzuchtkastens mit geschlossenem Deckel

Figur 3 in größerem Maßstab einen Teilschnitt des in Figur 2 dargestellten Kastens

Figur 4 eine Draufsicht auf die Unterseite der Heizplatte und

Figur 5 eine perspektivische Ansicht einer weiteren Ausführungsform der Heizplatte.

Der Anzuchtkasten besteht aus einer Wanne 26 aus schlagfestem Kunststoff, einer in diese Wanne eingesetzten Schale 28 und einem transparenten aufklappbaren Deckel 30. Die Schale 28 weist eine unverlierbare Stütze 32 auf, mit der der Deckel 30 in verschiedenen Höhenlagen abstützbar ist.

In die Schale 28 ist eine Heizplatte 10 eingelegt, die aus einem Isolierstoffträger 14 aus Epoxydharz und einer auf der Unterseite aufgedruckten Schaltung mit Heizleiterbahnen 16 besteht, die von einer Isolierschicht 20 bedeckt sind. Die gedruckte Leiterbahn 16 mit der Isolierschicht 20 ist dem Boden der mit nicht dargestellten Drainage-Kanälen und Durchtrittslöchern versehenen Schale 28 zugewandt. An den Heizleiter 16 ist eine nach außen geführte Zuleitung 24 angeschlossen, die mti einer Niederspannungsbatterie oder der Niederspannungsseite eines Netztrafos verbindbar ist.

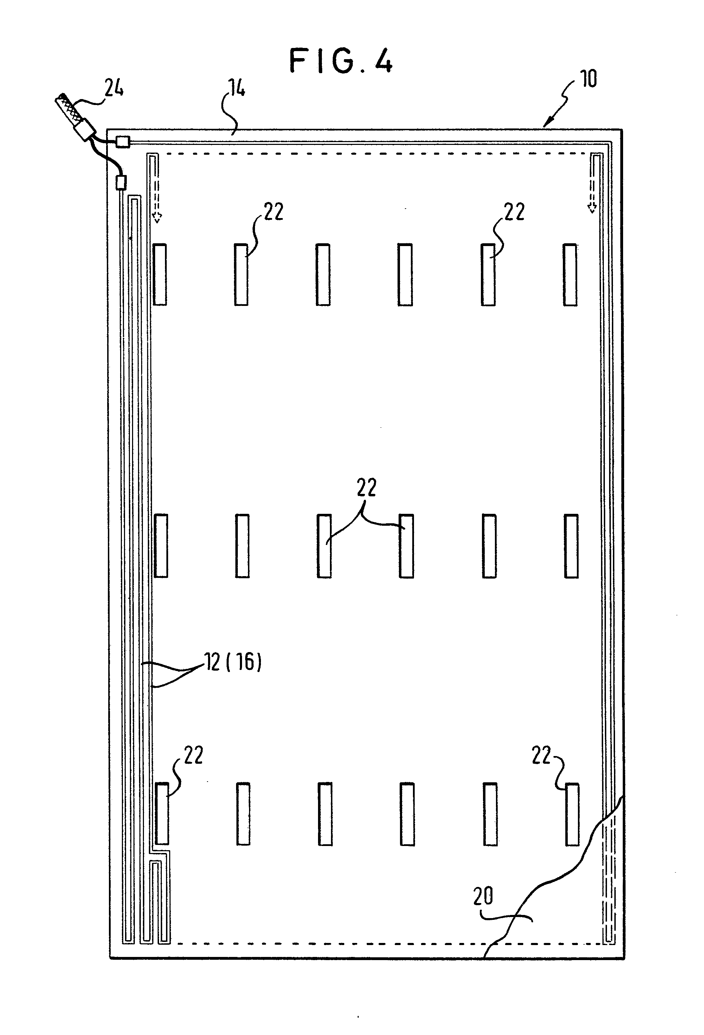

Wie aus Figur 4 ersichtlich, ist der Heizleiter meanderförmig über die Fläche verteilt, um eine möglichst gleichmäßige Wärmeabstrahlung pro Flächeneinheit zu gewährleisten.

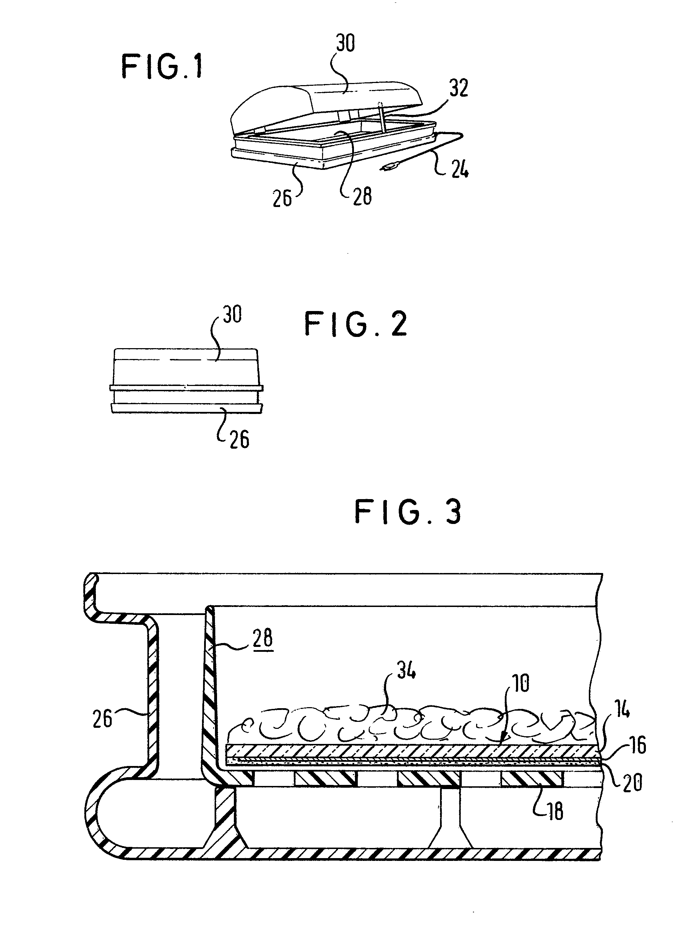

Die Heizplatte 10 ist mit Ausnehmungen 22 versehen, die in regelmäßiger Anordnung durch den Isolierstoffträger 14 und die Isolierschicht 20 geführt sind, und um die der Heizleiter jeweils herumgeführt ist. Diese Ausnehmungen dienen zum Wärmedurchtritt nach dem auf der Heizplatte 10 befindlichen Erdreich 34. Außerdem kann durch diese Ausnehmungen 22 überschüssiges Wasser aus dem Erdreich in die Schale 28 und aus dieser in die Wanne 26 eintreten, die den Boden der Schale 28 in einem gewissen Abstand (wie aus Figur 3 ersichtlich) abstützt.

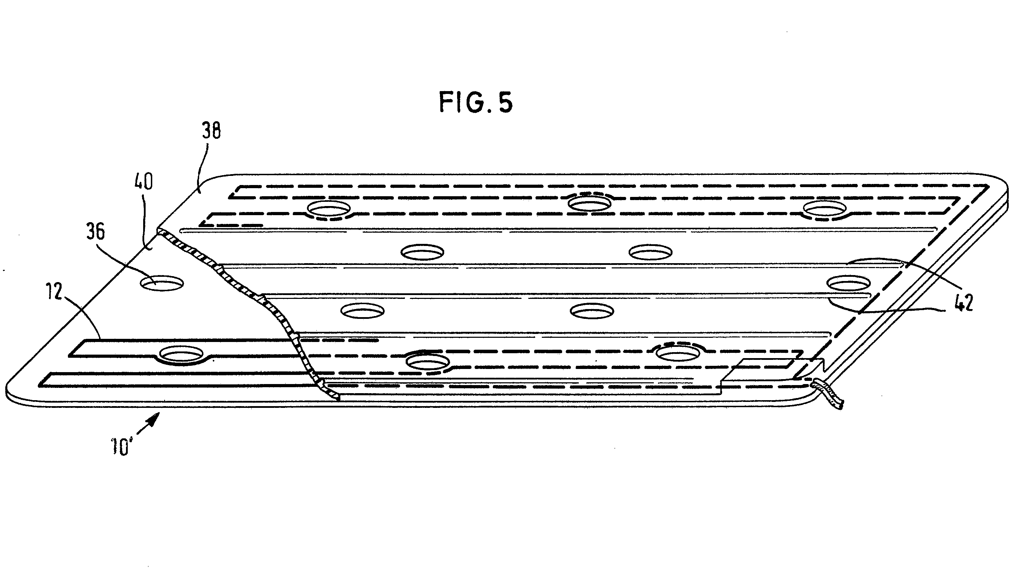

Gemäß Figur 5 besteht die Heizplatte 10' aus zwei miteinander verklebten gleichartigen Kunststoffschichten 38, 40, die an ihrer Berührungsfläche mit Rillen ausgestattet sind, in die der Heizdraht 12 eingelegt ist. Auf der Außenseite weisen die Schichten 38, 40 parallel zueinander verlaufende Abstandshalterippen 42 auf, zwischen denen durchgehende kreisrunde Ausnehmungen 36 vorgesehen sind.

0047426

- 6 -

Patentansprüche

1. Anzuchtkasten zum Aufziehen von Saatgut, dadurch gekennzeichnet, daß er am Boden eine Heizplatte (10) mit einem elektrischen Heizwiderstand (12) aufweist.

2. Anzuchtkasten nach Patentanspruch 1, dadurch gekennzeichnet, daß die Heizplatte aus einem Isolierstoffträger (14) und einer darauf angeordneten gedruckten Schaltung (16) besteht.

3. Anzuchtkasten nach den Ansprüchen 1 und 2, dadurch gekennzeichnet, daß die gedruckte Schaltung (16), die auf den Boden (18) des Kastens hin gerichtet ist, mit einer Isolierschicht (20) überzogen ist.

4. Anzuchtkasten nach den Ansprüchen 1 bis 3, dadurch gekennzeichnet, daß die Isolierstoffplatte Ausnehmungen (22;36) zum Wärmedurchtritt nach oben und Wasserdurchtritt nach unten aufweist.

5. Anzuchtkasten nach den Ansprüchen 1 bis 3, dadurch gekennzeichnet, daß der Heizleiter der gedruckten Schaltung meanderförmig geführt ist.

6. Anzuchtkasten nach einem der Ansprüche 1 bis 5, dadurch gekennzeichnet, daß er aus einer Wanne (26) einer darin angeordneten, die Heizplatte tragenden Schale (28) und einem transparenten Deckel (30) besteht.

7. Anzuchtkasten nach Anspruch 9, dadurch gekennzeichnet, daß die Schale (28) mit Drainage-Kanälen versehen ist.

8. Anzuchtkasten nach Anspruch 9, dadurch gekennzeichnet, daß eine unverlierbar eingebaute Stütze (32) vorgesehen ist, welche über Rastungen unterschiedlicher Höhe den Deckel in unterschiedlichen Öffnungsstellungen hält.

9. Anzuchtkasten nach Patentanspruch 1, dadurch gekennzeichnet, daß die Heizplatte (10') aus zwei miteinander verklebten gleichartigen Kunststoffschichten (38;40) besteht, die auf ihrer Berührungsfläche Rillen aufweisen, in die der Heizleiter (12) eingelegt ist.

10. Anzuchtkasten nach den Ansprüchen 4 und 9, dadurch gekennzeichnet, daß die beiden Kunststoffschichten (38,40) auf ihrer Außenseite parallel zueinander verlaufende Abstandshalterippen (42) aufweisen, zwischen denen die Ausnehmungen (36) angeordnet sind.

**FIG.1**

**FIG.2**

**FIG.3**

# FIG.4

FIG. 5

Europäisches Patentamt

**EUROPÄISCHER RECHERCHENBERICHT**

0047426

Nummer der Anmeldung

EP 81 10 6587

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>US - A - 3 606 697</u> (EDEN)<br><br>* Spalte 2, Zeile 59 bis Spalte 4, Zeile 6 - Spalte 4, Zeilen 40-46; Figuren 1 bis 5 *<br><br>-- | 1,4,5,6 |
| X | <u>US - A - 3 136 090</u> (CARNWATH)<br><br>* Spalte 2, Zeile 45 bis Spalte 6; Zeile 18 - Figuren 1 bis 8 *<br><br>-- | 1 |
| | <u>CH - A - 257 644</u> (ISELIN)<br><br>* Patentanspruch; Figuren 1,9 *<br><br>-- | 8 |
| | <u>DE - A - 1 801 732</u> (TEXAS IN-STRUMENTS)<br><br>* Anspruch 1 *<br><br>-- | 2 |
| | <u>US - A - 3 812 320</u> (BORGREN)<br><br>* Spalte 1, Zeile 46 bis Spalte 2, Zeile 33 - Figuren 1,2,3 *<br><br>---------- | 9 |

**KLASSIFIKATION DER ANMELDUNG (Int. Cl.³)**

A 01 G 9/26
A 01 G 9/20

**RECHERCHIERTE SACHGEBIETE (Int. Cl.³)**

A 01 G 9/00
       9/20
       9/24
       9/26
H 05 B 3/26
       3/28

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| DEN HAAG | 08-12-1981 | HERYGERS |

EPA form 1503.1 06.78